# EUROPEAN PATENT SPECIFICATION

(11) **EP 3 698 380 B1**
(45) Date of publication and mention of the grant of the patent: **10.04.2024**
(21) Application number: 18808205.1
(22) Date of filing: 16.10.2018
(51) Int. Cl.: G21C 17/10, G21C 7/12, G01D 5/20

(54) **METHOD OF MEASURING A POSITION AND A POSITION MEASURING DEVICE**
VERFAHREN ZUM MESSEN EINER POSITION UND POSITIONSMESSVORRICHTUNG
PROCÉDÉ DE MESURE D'UNE POSITION ET DISPOSITIF DE MESURE DE POSITION

(30) Priority: 19.10.2017 CZ 20170670
(43) Date of publication of application: 26.08.2020
(73) Proprietor: Skoda JS a.s., 316 00 Plzen (CZ); ZAT a.s., 261 01 Pribram (CZ)
(72) Inventor: HUS, Jiri, 312 00 Plzen (CZ); MARTINEC, Igor, 312 00 Plzen (CZ); PEDAL, Jiri, 330 27 Vejprnice (CZ); CEDL, Marek, 360 01 Karlovy Vary (CZ); POKORNY, Martin, 312 00 Plzen (CZ)
(74) Representative: Pavlica, Tomas
(86) International application number: PCT/CZ2018/000051
(87) International publication number: WO 2019/076388

(56) References cited:
- EP-A1- 0 795 738
- CN-A- 1 147 677
- DE-A1-102012 000 529
- DE-B- 1 213 310

## Description

### FIELD OF THE INVENTION

The present invention relates to a method of a position measurement of an element being monitored which moves in a linear (rectilinear) way, with the advantage being in the predefined displacement steps, and to a position measuring device for providing such method. In particular, the invention deals with the device used for measurement of the absolute position of the control rod as a part of the system of nuclear reactor inspection and control system. Especially advantageously, the invention deals with the position measuring device for measuring an absolute position of a control rod in a nuclear power reactors, especially advantageously in a VVER 1000 or VVER 1200 type reactor, but also other types of nuclear reactors. For the purposes of the present invention, the term "absolute position measurement" means an establishment, i.e. determination/evaluation, of an absolute position of an element being monitored. The term "absolute position" then means the actual position of the element being monitored, i.e. the position where the linear-motion element being monitored is located at the moment of the measurement.

### BACKGROUND OF THE INVENTION

According to the current state of the art, the current devices used to measure the position of the linear-motion element being monitored, especially the control rod of the nuclear reactor, are used to determine the position of the control rod drive mechanisms in nuclear reactors, for instance. Such devices frequently use a coil or a group of coils and a coding element, also called shunt, consisting of magnetic and non-magnetic sections and, to achieve the required measurement accuracy mostly depending on the length of motion step of the element being monitored, then in dependence on the number of the discrete steps being evaluated they require a certain total number of outlet conductors. Then, the relevant cable lines through which such conductors are routed from the position measurement device of the element being monitored to the evaluation facility have to be sized for the said number of conductors. In the case of a great number of conductors, it may cause a problem both in the current nuclear power plants and in those being designed. The disadvantage of the current devices for position measurement of elements being monitored is that they lack a redundancy of complete or limited function in the event of a so-called single failure caused, for example, by the breaking of a conductor. In the current practice of nuclear power plants, for instance, in the case of failure of such control rod position monitoring device, further operation of the nuclear reactor in question has to follow the set operation procedures which include the necessity to reduce the power of or shut down the nuclear reactor. Any sensor failure, therefore, may affect the economy of the operation of the whole nuclear reactor, which is the disadvantage in the current step sensors. Introducing a complete or partial function redundancy for a single failure in the current step sensors would mean increasing the number of the outlet conductors for which, however, the relevant cable routes of the nuclear power plants being operated and designed are not dimensioned. As an example describing the state of the art in step sensors, one can mention document RU2073917 which describes a similar linear sensor with inductive coils located inside the sealed pipe of a sensor with the above-described disadvantages where there is no redundancy provided for single failure occurrence.

Another method and device for the measurement of the absolute position of a linear-motion nuclear reactor control rod is known from patent document DE1213310B.

The invention aims at proposing such a way and such a device to determine the absolute position of an element in which, with the given measurement accuracy (step size) and number of discrete steps being evaluated, the total number of outlet conductors will not exceed the number of conductors for which the relevant cable routes of the NPP being operated and designed are dimensioned and will provide redundancy for complete or limited function in case of sensor's single failure (e.g., conductor breaking).

### SUBJECT OF THE INVENTION

The above-mentioned drawbacks are eliminated by the method of measurement of linear-motion element position according to Claim 1 and by the device for element's absolute position measurement according to Claim 2 of this invention. The advantageous designs of the device for position measurement of the element being monitored according to the present invention are described in dependent Claims 3 to 9.

The essence of the method of measurement of the linear-motion element's absolute position during which a coding element consisting of magnetic and non-magnetic parts and a sensor including a powered primary winding and a magnetically-coupled multi-tap measuring secondary winding move against each other, where either the sensor or the element is connected with the linear-motion element being monitored and the other is stationary, while during this motion voltage is generated on the above-mentioned multi-tap measuring secondary winding, whereby generating a corresponding code unequivocally identifying the absolute position of the linear-motion element, is that at least three voltage levels are created at each respective tap of the multi-tap measuring secondary winding in dependence on the specific position of the linear-motion element, while forming a unique combination of the voltage levels measured on the whole multi-tap secondary winding for every measured position of the linear-motion element, which allows for reducing the number of the secondary winding taps needed to determine the linear-motion element position.

The device for measurement of the absolute position of the linear-motion element, especially the nuclear reactor control rod, contains a position sensor with a coil set consisting of a powered primary winding and a multi-tap measuring secondary winding, hereinafter also called the "position sensor" or "sensor", and a coding element arranged in parallel with it, modulating magnetic flow in the position sensor's coil set. This coding element comprises magnetic and non-magnetic sections of appropriate lengths, positioned alternately in a line to generate a set of codes which identify unequivocally all the linear-motion element positions being monitored. Either the coding element or the position sensor is connected with the linear-motion element being monitored for their simultaneous movement. In dependence on the position of the linear-motion element being monitored, the nuclear reactor control rod for instance, the coding element moves against the position sensor's coils and vice versa, whereby changing their inductiveness. Due to the changes in position sensor's coils inductiveness, a voltage combination forms at the individual taps of the multi-tap secondary winding, which is measured to generate the above-mentioned unique code clearly identifying every position of the linear-motion element being monitored. In the especially advantageous design of the device according to the invention, the coding element is arranged in a coaxial manner with the sensor to influence it to the maximum possible extent.

Therefore, the coding element and the sensor are linearly movable against each other and arranged for evaluation of the position of the linear-motion element being monitored by measuring the voltage generated on the sensor's measuring secondary winding. As stated above, the position sensor includes a coil set comprising a primary winding and a multi-tap secondary winding. The primary winding is supplied from a suitable power source, while the multi-tap secondary winding is magnetically-coupled with the primary one to induce voltage on the secondary winding with simultaneous galvanic separation of the feeding primary winding and measuring secondary one. The magnetic coupling of the primary and secondary windings is especially advantageously created by means of their coaxial arrangement; however, it can also be achieved by means of their parallel arrangement, etc. According to the present invention, the multi-tap secondary winding is formed by a system of at least two secondary coils designed to read the voltage induced at the individual secondary coils, while the magnitudes of the voltage induced at the taps of the individual secondary coils correspond with the measured positions of the linear-motion element being monitored to generate codes identifying the absolute position of the linear-motion element being monitored. According to the present invention, the linear-motion element position measurement device is designed so as to include a position sensor equipped with a primary winding arranged in sections electromagnetically-separated from each other; thus designed primary winding bears a multi-tap secondary winding consisting of a group of separate secondary coils, where each of the secondary coils consists of at least two winding parts and is arranged in parallel or especially coaxially with the primary winding, with either part of the secondary coil's winding being organized on a different electromagnetically-separated section of the primary winding and with the lengths of the individual magnetic and non-magnetic parts of the coding element being at least corresponding to the length of the electromagnetically-separated section of the primary winding.

According to one of its advantageous designs, the device according to the present invention is equipped with a sensor with a multiple primary winding containing more paths; especially advantageously, the device according to the present invention is equipped with a primary winding of two paths. Admittedly, more primary winding paths require more sensor outlets but this is possible just due to the reduction of the number of the secondary winding taps by designing it according to the present invention. The paths of the multiple primary winding are laid advantageously on the coil core in the appropriate number of coaxially arranged tiers; for example, in the double primary winding, i.e. the winding with two paths, the two paths are laid in two tiers arranged on each other, in three tiers in the case of a triple primary winding, etc., and the said multiple primary winding is designed with centre or centres being tapped between the neighbouring paths so that each part can be power-supplied independently. But it is also possible to design a multiple primary winding in other way than by winding its individual paths in tiers over each other; for example, the individual paths can be wound beside each other, etc. The multiple primary winding design in the device according to the present invention ensures resistance of the device according to the present invention to a so-called single failure of the position sensor, i.e. a sensor failure caused for instance by the breaking of a conductor of the primary winding in one of the paths or similar. If a single failure occurs in the position sensor's primary winding, i.e. by conductor breaking in one of the paths of the multiple primary winding, for instance, the complete function of the position sensor is ensured by means of at least the remaining one path of the primary winding that has not been broken. When a conductor in one of the paths of the multiple primary winding gets broken, excitation in the remaining at least one path of the multiple primary winding increases especially advantageously by, for instance, the power supply and evaluation electronics changing over to the mode of increased excitation of the remaining part or the remaining paths of the primary winding which is/are functional to compensate for the failure. The increase in excitation of the remaining functional at least one primary winding path is only advantageous but not necessary for the reliable function of the sensor on single failure occurrence. As already mentioned above, the term "single failure" for the purposes of the present invention means a failure caused, for instance, by conductor breaking, contact loosening or degradation in a connection, etc.

According to its especially advantageous design, the primary winding of the device according to the present invention is longer than the multi-tap secondary winding arranged on it, consisting of a system of secondary coils excited by the primary winding to secure advantageously the symmetry of the magnetic field at all the secondary coils.

The primary winding is excited especially advantageously by means of a current source providing alternating current of constant amplitude.

As already stated above, the device according to the present invention has a position sensor the multi-tap secondary winding of which consists of a group of secondary coils where each secondary coil has several (two, three or four, for instance) winding parts. Especially advantageously, such secondary winding parts of each secondary coil are symmetrical to each other, which means for the purposes of the present invention that they are substantially of identical length and of identical number of turns. Such parts of the secondary coil winding are arranged appropriately in the corresponding number of electromagnetically-separated sections of the primary winding, which means that in the case of two winding parts of a single secondary coil both parts are arranged on two electromagnetically-separated sections of the primary winding, in the case of three winding parts of the secondary coil they are arranged on three electromagnetically-separated sections of the primary winding, and in the case of four winding parts of the secondary coil they are arranged on four electromagnetically-separated sections of the primary winding, with always one winding part being on one electromagnetically-separated section. It is advantageous to arrange the above-mentioned parts of the secondary coil windings on the electromagnetically-separated sections of the primary winding neighbouring each other to simplify code generation. By using this way to design the sensor of the device according to the present invention, an output signal having at least three voltage levels is achieved at the outlet of each of the secondary coils of the sensor when the position of the element being monitored changes and hence also the position of the coding element as against the described arrangement of the sensor's secondary coils. It makes it possible to spare the number of the sensor's outlet conductors. Especially advantageously, the device according to the present invention has a sensor where each of the secondary coils is designed of two winding parts arranged appropriately on two neighbouring electromagnetically-separated sections of the primary winding so that each part of the secondary coil is set on a different electromagnetically-separated section of the primary winding, as the two parts of the secondary coils set on two electromagnetically-separated sections of the primary winding allow for reducing the number of the outlet conductors to one half and, at the same time, ensuring a reliably measurable level of outlet voltage for all the relevant positions of the coding element as against the particular secondary coil. This, however, does not prevent designing secondary coils with more parts.

Choosing the suitable physical length of the individual electromagnetically-separated sections of the primary winding and the appropriate lengths of the secondary coils of the sensor or of their parts, as well as the number of the secondary coils will make it possible to achieve the required accuracy of measurement of the current position of the element being monitored within the extent of its motion. Therefore, the length of the electromagnetically-separated section, essentially, makes it possible to determine the length of the motion step of the element being monitored, e.g. 40 mm. The displacement proper of the element being monitored within the extent of its motion can be both step-wise and continual. For instance, for the extent of motion of the monitored element being 560 mm and for the motion measurement accuracy being 40 mm, the number of electromagnetically-separated sections of the primary winding on which the secondary winding is set as described above is at least 14; for the extent of motion of the monitored element being 2000 mm, the number of electromagnetically-separated sections is 50; and for the extent of 3800 mm the number is 95.

Especially advantageously the device according to the invention has a sensor whose windings are created on a coil core of a ferromagnetic material which has sections on itself provided for winding electromagnetically-separated parts of the primary winding.

For the purposes of this invention application, the term "coding element" means an element set up of linearly arranged magnetic and non-magnetic parts of suitable lengths, designed for linear motion against the sensor with measuring secondary coils, and it is possible that the coding element moves against stationary measuring coils or the measuring coils move against a stationary coding element. Both the magnetic and non-magnetic parts of the coding element are of suitably chosen lengths and are arranged so as to generate a unique signal at the outlets of the sensor's measuring coils for at least each measured position of the element being monitored by the position of such magnetic and non-magnetic parts of the coding element against the sensor with the required accuracy of measurement of the linear motion of the element being monitored. In essence, the required accuracy of measurement of the linear motion of the element being monitored is determined by the required number of the discrete steps of the element being monitored in the course of its linear motion. Thus, with the above-mentioned suitable setting of the suitably chosen lengths of the magnetic and non-magnetic parts of the coding element, it is ensured that a unique code is generated for each measured position of the coding element against the position sensor's coils which correspond to the currently measured position of the element being monitored. This unique code is generated by measuring the voltage induced on the individual measuring secondary coils. The voltages on the secondary coils are different for every position of the element being monitored, and at least three voltage levels can occur on each secondary coil in dependence on the number of its parts, which with the given number of the secondary coils makes it possible to increase the number of the differentiated positions of the element being monitored. As already mentioned above, changes in the voltage induced on each secondary measuring coil occur due to changes in their inductiveness as a result of the movement of the element being monitored, whereby changing the position of the magnetic and non-magnetic parts of the coding element against the group of the measuring coils. An example of generation of such a unique code is described herein below.

Especially advantageously, in the device according to the invention, by setting up suitably the coding element's magnetic and non-magnetic parts of their different lengths, it is possible to duplicate the number of the measured mutually distinguishable positions of the linear-motion element being monitored with the same number of the electromagnetically-separated sections, so that always with every change of position between the neighbouring measured positions some of the parts of the magnetic and non-magnetic section is in such a position against the sensor which causes a change in the generated signal at the outlet of the sensor's measuring secondary coils. For instance, for the extent of motion of the element being monitored being 560 mm and for the double accuracy of motion measurement being 20 mm, the number of the measured mutually distinguishable positions of the element being monitored given by the individual electromagnetically-separated sections of the primary winding on which the secondary winding is set as described above is at least 28; for the extent of motion of the monitored element being 2000 mm, the number of the measured mutually distinguishable positions in such a case is 100; and for the extent of 3800 mm the number is 190.

As already mentioned above, a unique code is generated in the device according to the invention for every position of the element being monitored by suitably setting up the magnetic and non-magnetic parts of the coding element of different lengths. Especially advantageously, in the coding element's position corresponding to the chosen relevant position of the element being monitored, e.g. the lower end position of the nuclear reactor control rod, the coding element is designed for creating a considerably different impedance of the power-supply primary coil as against the other arbitrary positions of the coding element. This way, it is possible to ensure reliable identification of the chosen relevant position of the element being monitored even in case of failure of the remaining parts of the sensor. Measuring the impedance of the sensor's primary winding is especially advantageous because this winding is especially robust thanks to its design. This way, according to the present invention, it is possible to ascertain independently that the element being monitored has reached the chosen relevant position. The above-mentioned clearly identifiable change in the primary coil impedance is achieved advantageously by means of the clearly identifiable increase/decrease of its impedance, which only occurs in the above-mentioned relevant position of the element being monitored. Such clearly identifiable increase/decrease of primary coil's impedance is achieved by covering the primary coil with an especially long magnetic or non-magnetic section of the coding element. This will ensure advantageously the possibility of independent and reliable ascertainment that the element being monitored has reached the said relevant position. Advantageously, the relevant position of the element being monitored is the end position of the element being monitored, which, especially advantageously, is the nuclear reactor control rod, so that, for instance, if any of the outlet conductors of the system of measuring coils gets broken, it is possible to indicate by changing primary coil induction that the nuclear reactor control rod has reached its lower position.

For the purposes of this application, the relevant position of the element being monitored is also advantageously considered to be a certain extent of positions of the element being monitored in which essentially the same result is already achieved. For instance, the lower position of the nuclear reactor control rod is considered to be such a position which ensures its maximum control effect on the fission reaction where the control rod already covers the whole length of the active core of the nuclear reactor.

Thus, in essence, the device for position measurement of the element being monitored is the indicator of the absolute position of the element being monitored. The changes in the position of the coding element against the system of the primary and secondary coils of the device according to the present invention in dependence on the position of the element being monitored influence the inductiveness of the individual measuring secondary coils, whereby changing the magnitude of the voltage induced on them and, thanks to the said different voltages induced on the individual secondary coils, it is possible to generate a unique code for every position of the element being monitored. Advantageously, the position measurement device also includes power-supply electronics to feed the coil system and evaluation electronics to evaluate the said absolute positions.

The advantages of the method and of the device according to the present invention are the following in particular:
- Owing to the multi-state outlet of each measuring coil, the position measurement device according to the present invention has been designed with a small, even minimum, number of measuring coil taps on which always at least three voltage levels are generated due to the motion of the coding element against the coil system, whereby ensuring high accuracy in position measurement of the element being monitored, which, especially advantageously, is the nuclear reactor control rod. With a given number of secondary coil taps, the sensor according to the invention, therefore, makes it possible to provide more accurate information about the position of the element being monitored (e.g., the control rod). The said advantage is achieved by generating at least three voltage levels for each of the measuring coils, which makes it possible to increase the number of combinations for the given number of measuring coils and, therefore, avoids the need to increase the number of conductors of the installed cable routes to increase the accuracy of information about the control rod position;
- The above-described reduction in the number of outlet conductors allows for designing more primary winding paths to increase sensor resistance to a single failure caused by, for instance, conductor breaking in one of the primary winding paths;
- The possible higher number of the relative positions being evaluated of the coils and of the coding element makes it possible to use the sensor according to the present invention also for different applications where the accurate knowledge of position of the element being monitored is required;
- Possibility of independent evaluation of the relevant position of the linear-motion element being monitored, especially the lower end position of the nuclear reactor control rod, from the measured impedance of the sensor only, which is ensured by the power-supply and the evaluation electronics of the primary winding;
- The function of the primary winding is backed up by the possibility to power supply any part of the primary winding;
- In the case of a single failure, the power-supply and the evaluation electronics connected to the primary winding will change over advantageously to the mode of higher excitation of the functional part(s) of the primary winding, whereby ensuring an outlet signal from the measuring coils, which can be processed further by the power-supply and evaluation electronics;
- Thank to its design, the device according to the present invention is able to work reliably also in the case of occurrence of failures which, in the devices currently used to monitor the absolute position of the element being monitored especially in nuclear power plants would mean the necessity to reduce reactor power or to shut down the reactor, due to which the nuclear power plant operator incurs enormous losses, which are reduced substantially by the device according to the present invention;
- The sensor according to the present invention in connection with a suitable drive mechanism of the linear-motion element being monitored completes the integral technical solution for new projects and for modernization projects of existing nuclear power plants.

### DESCRIPTION OF DRAWINGS

The example of the embodiment of the proposed solution is described with reference to the following figures, in which:
Fig. 1 presents a view of the first example of embodiment of the measuring device according to the present invention;
Fig. 2a presents a view of the sensor;
Fig. 2b presents a longitudinal sectional view of the sensor shown in Fig. 2a;
Fig. 2c presents an A-A sectional view of the sensor shown in Fig. 2b;
Fig. 3a presents a wiring diagram of the individual primary and secondary coils of the sensor shown in Fig. 2a;
Fig. 3b presents the principle of generation of three outlet decision-making levels of voltage by moving the coding element along both secondary coils of the sensor to generate codes;
Fig. 3c presents a curve of the generated decision-making levels on the individual secondary coils of the sensor;
Fig. 3d presents an example of a potential code corresponding to the three outlet decision-making levels of both secondary coils shown in Fig. 3b;
Fig. 4 presents a second example of embodiment of the coding element for measurement of the length of travel of 560 mm of the linear element being monitored;
Fig. 5 presents a wiring diagram of the multi-tap secondary winding formed by six secondary coils;
Fig. 6 presents the code generated on the sensor shown in Fig. 5 with the coding element shown in Fig. 4, where the coding element moves by steps with the step being equal to the length of the individual electromagnetically-separated sections of the sensor;
Fig. 7 presents the code generated on the sensor shown in Fig. 5 with the coding element shown in Fig. 4, where the coding element moves continually against the sensor (or vice versa).

### DETAILED DESCRIPTION OF PREFERRED EMBODIMENTS

The method of measurement of the absolute position of the linear-motion element and also of the device of measurement of the position will be understood easier on the examples of the embodiment described below. However, it is obvious that these examples of the embodiment serve for understanding and illustration of the invention only and should not be construed to restrict the invention to the described examples only. The described embodiment examples use the same figure marks and information for the same technical elements and the data provided at the individual examples of embodiment of the device according to the present invention are intended as applicable also in other examples of the embodiment, unless it is expressly stated otherwise or unless it follows otherwise from the context of the description.

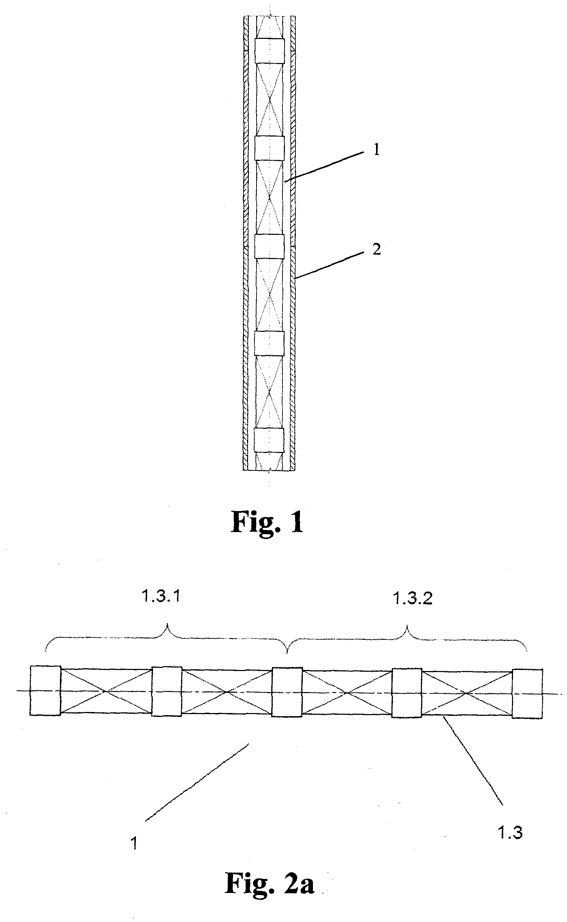

Fig. 1 shows an example of the embodiment of the device for measurement of the position of the element being monitored, which can be used, for instance, in nuclear reactors or in systems with linear motion of the element being monitored. Especially advantageously, the device according to the present invention is used in nuclear reactors as a part of the nuclear reactor's control rod drive mechanism.

By the relative motion of the sensor against the coding element, changes occur in the voltage induced in the individual secondary coils of the sensor of the device according to the present invention, whereby generating a code defining the precise absolute position of the element being monitored, which, especially advantageously, is the control rod of the nuclear reactor. Owing to the at least three-state outlet on the individual secondary coils, the device according to the present invention reduces the number of the conductors led from the sensor for identification of the position of the element being monitored.

The position measurement device shown in Fig. 1 includes a sensor 1 and a coding element 2 arranged in a coaxial manner in this example of embodiment, and in this example of embodiment the coding element 2 is connected mechanically with the linear-motion element being monitored whose position is to be determined, while the sensor 1 is immovable. However, it is obvious to an expert that it is also possible to connect the sensor with this element being monitored, in which case the coding element would be immovable. It is also possible to set up the sensor 1 and the coding element 2 in another way, whereby ensuring their magnetic coupling to influence the voltage induced on the secondary coils due to the movement of the sensor and of the coding element against each other. The example of embodiment shown in Fig. 1, therefore, only serves for illustration of the embodiment of the device according to the present invention.

The sensor 1 presented in Fig. 1 contains a magnetic core made of a suitable material and is provided for illustration with only four electromagnetically-separated sections of the sensor primary winding. The primary winding has two paths (is duplicated) and has the centre tapped. A secondary winding consisting of two secondary coils is organized on the primary one in a coaxial manner. Fig. 1 only shows an especially simplified embodiment serving to understand the device according to the present invention. However, it is obvious to an expert that it is also possible to design much more complicated combinations of the sensor and of the coding element, particularly in dependence on the length of travel of the element being monitored and on the needed length of the step being monitored. For the proper function of the device according to the present invention, it is obvious that it is especially advantageous if all the electromagnetically-separated sections of the sensor are of identical lengths. A similar rule also applies especially advantageously to the parts of the primary and secondary windings whose individual parts are therefore advantageously always identical as appropriate.

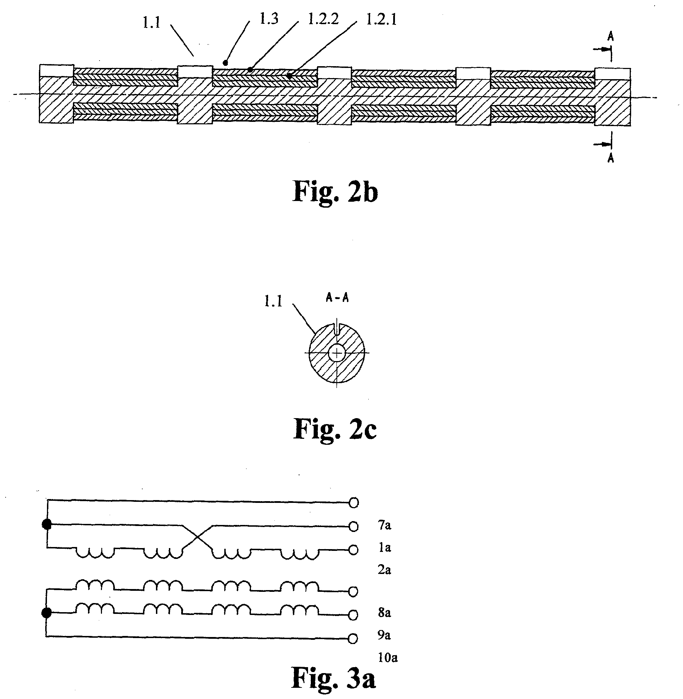

An example of an especially advantageous embodiment of the sensor 1 is obvious from Fig. 2a and 2b. Fig. 2a shows a side view of the core 1.1 of the coil, which in this example of embodiment is made of a ferromagnetic material with the primary and secondary coils being wound up, and Fig. 2b shows a sectional view of the sensor. The core 1.1 of the coil is provided with sections 1.1.1 for the electromagnetically-separated parts of the primary winding 1.2. The electromagnetically-separated sections of the primary winding 1.2 of the sensor 1, according to the present invention, are designed especially advantageously by changing the winding direction of the primary winding 1.2 in the consecutive sections 1.1.1 on the core 1.1.

Fig. 2a to 2c show the sensor of Fig. 1. As follows from the said figures, the sensor 1 in this example of the embodiment is designed so that a double primary winding 1.2 is wound on the core 1.1 and a secondary winding 1.3 consisting in this example of the embodiment of two secondary coils 1.3.1 and 1.3.2 is wound up onto it and coupled with it in a magnetic way. In this example of the embodiment, the core 1.1 of the coil has four sections 1.1.1 onto which four electromagnetically-separated parts of the primary winding 1.2 are wound up gradually, and this primary winding 1.2 is wound as double with the first primary winding 1.2.1 and with the second primary winding 1.2.2 with the tapped centre of the primary winding 1.2. Therefore, the primary winding 1.2 is laid on the core 1.1 of the coil with two paths arranged in two tiers onto each other. In this example of the embodiment, a multi-tap secondary winding 1.3 is wound subsequently on the primary winding 1.2. In this example of the embodiment, the multi-tap secondary winding 1.3 consists of two secondary coils 1.3.1 and 1.3.2, and either of the secondary coils in this example of the embodiment consists of two parts of its winding, where either part of the winding of the secondary coil of the secondary winding 1.3 is arranged on other electromagnetically-separated part of the primary winding 1.2. As the primary winding 1.2 is designed as a double one, the design of both of its paths is shown more clearly in Fig. 2b showing a longitudinal sectional view of the sensor 1 of Fig. 2a. The embodiment of the connection of the primary winding 1.2 and of the secondary winding 1.3 is then apparent from Fig. 3a. In this example of the embodiment, the magnetic coupling of the secondary winding 1.3 with the primary winding 1.2 is especially advantageously made in Fig. 2b so that the secondary winding 1.3 is wound up in a coaxial way on the primary winding 1.2, or on its second primary winding 1.2.2 in the embodiment example shown. Fig. 2b, therefore, shows the primary winding 1.2 with two paths formed by the first primary winding 1.2.1 wound below on the core 1.1 and by the second primary winding 1.2.2 subsequently wound up on the first primary winding 1.2.1, with the centre of the primary winding 1.2 being tapped. As already described above, the electromagnetically-separated sections of the primary winding 1.2 or of both the first primary winding 1.2.1 and the second primary winding 1.2.2 are designed so that always two adjacent sections 1.1.1 of the core 1.1 of the coil contain the sections of the first primary winding 1.2.1 and of the second primary winding 1.2.2 wound in an opposite direction against each other, which means that the direction of winding of the respective primary winding 1.2.1, 1.2.2 always changes on the next section 1.1.1 of the core 1.1 to create the individual electromagnetically-separated sections of the primary winding 1.2.

Fig. 2c presents a cross section of the sensor 1 from Fig. 2a in the A-A plane, i.e. in the point separating the individual electromagnetically-separated sections 1.1. As one can see in Fig. 2c, a slot is made in the separating sections between the individual sections 1.1.1 through which the relevant primary winding and potentially also the secondary winding is routed to the next section advantageously. The lengths of the individual electromagnetically-separated sections of the primary winding 1.2 are identical, namely 40 mm in this case.

Fig. 3a shows a diagram of connection of the individual windings of the coils of the sensor 1 of the device according to the present invention shown in Fig. 1 or Fig. 2a. As one can see here, the primary winding 1.2 is doubled with two paths formed by the first primary winding 1.2.1. and second primary winding 1.2.2 and is tapped in the centre. Thus, if one part of the primary winding 1.2 gets broken, the remaining path of the primary winding 1.2 can still be power supplied and a code corresponding to the absolute position of the linear-motion element being monitored can be obtained from the secondary winding 1.3. Then, especially advantageously, it is possible to increase excitation in the remaining path of the primary winding 1.2 to compensate for the broken part of the primary winding 1.2. As follows from Fig. 3a, both the first primary winding 1.2.1 and the second primary winding 1.2.2 forming the primary winding 1.2 include four sections each, which are electromagnetically-separated from each other as already described above. The winding direction of both the first primary winding 1.2.1 and second primary winding 1.2.2 wound on each other in one electromagnetically-separated section of the primary winding 1.2 is such so that the individual parts of the primary winding 1.2 do not disturb each other during operation but, on the contrary, so that the effects of current in both paths of the primary winding 1.2 arranged in the present example of the embodiment in two tiers of the primary winding 1.2 wound on each other are summed up.

In this example of the embodiment, the multi-tap secondary winding 1.3 consists of a system of two secondary coils set up in a line, of which each is set up on two electromagnetically-separated sections of the primary winding 1.2 set up in a line and which have, in this embodiment, one end connected to a common tap and the other is led separately out, so that three conductors led out of this multi-tap secondary winding 1.3 are only required.

The coding element 2 of the device according to the present invention consists of at least one magnetic section demarcated by non-magnetic sections or vice versa. Fig. 1 shows the coding element 2 consisting of one magnetic section reaching over all four electromagnetically-separated sections of the primary winding, which is demarcated on both sides by non-magnetic neighbourhood. The coding element 2 with its magnetic and non-magnetic sections moves over the sensor 1 as a result of changes in the position of the linear-motion element being monitored, generating a unique code in the secondary winding 1.3 of both secondary coils. For the purposes of this application, the term "movement of the coding element 2 against the sensor 1" means a relative movement, i.e. both the physical movement of the coding element against the fixed sensor and the movement of the sensor against the fixed coding element 2.

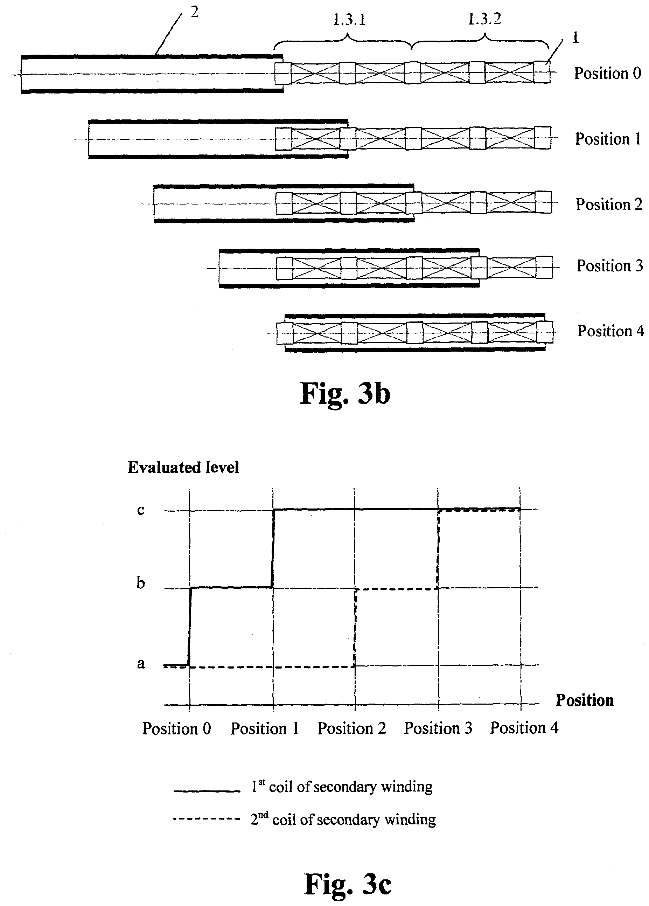

Fig. 3b shows the principle of generating three decision-making levels of voltage on one secondary coil of the device according to the present invention when moving the coding element 2 over the said coil of the secondary winding 1.3. Position 0 shows the coding element 2 whose magnetic section does not cover any of the parts of this secondary coil of the secondary winding 1.3 yet. This state shown in Fig. 3c corresponds to the level of output voltage "a", i.e. the lowest voltage induced on the particular secondary coil. In position 1, the magnetic section of the coding element covers the whole first part of the secondary coil, which is located on one of the magnetically-separated sections of the primary winding. As follows from Fig. 3c, this position corresponds to the level of output voltage "b", i.e. the medium level. In position 2 in Fig. 3b, the coding element 2 is shown in a position completely covering the relevant secondary coil. The output voltage level at its outlet is "c", i.e. the highest one. An expert will understand that the voltage curve shown in Fig. 3c has been simplified for convenience and that the actual voltage curve would not be as jump-wise as shown. Therefore, it is advisable to set threshold voltage levels on the reaching or exceeding of which the voltage output level would be deemed as if already achieving the given jump value. It is therefore obvious that, thanks to the invention, it is possible by means of three conductors only to generate a signal identifying five positions in total of the element being monitored.

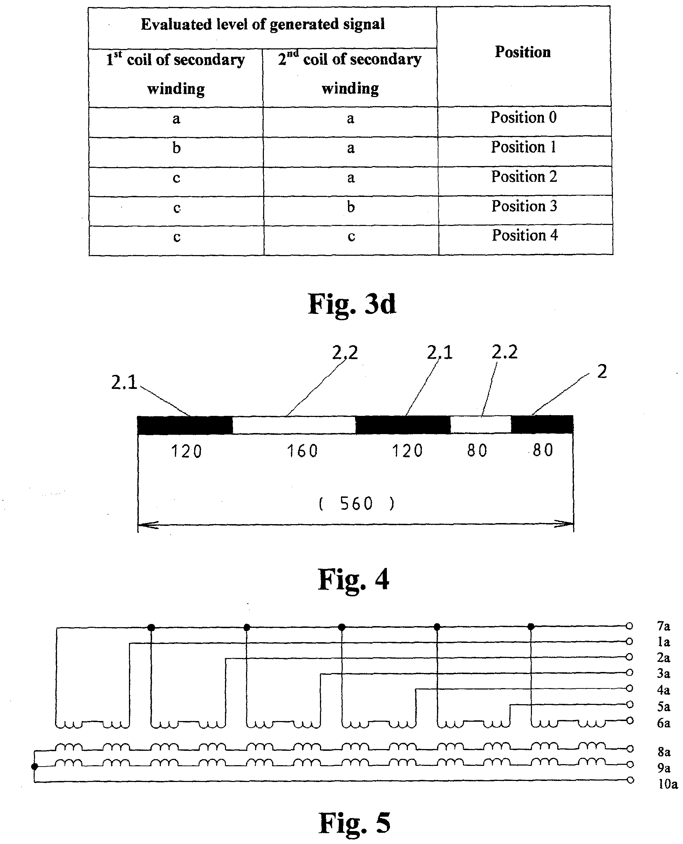

Fig. 3d then shows an example of a possible code corresponding to three different levels of voltages a, b, c on two secondary coils of the secondary winding 1.3 of the device shown in Fig. 1. Level "a" corresponds to the state where the relevant secondary coil is not covered by the coding element 2, level "b" corresponds to the state where the coding element covers the first part of the secondary winding 1.3, and level "c" corresponds to the state where the coding element covers one whole secondary coil of the secondary winding 1.3. As follows from the above, it is especially advantageous when the length of the magnetic and non-magnetic parts of the coding element 2 corresponds to the multiples of the length of one electromagnetically-separated section of the sensor 1 or of the part of the secondary coil set up on it. The length is 40 mm in the given example of the embodiment, so that the total length of one secondary coil is 80 mm.

Fig. 4 shows a second example of embodiment of the coding element 2 for travel length of 560 mm, which consists of two non-magnetic sections 2.2 and two magnetic sections 2.1, and the minimum length of such individual magnetic or non-magnetic parts corresponds to the whole multiples of the length of one electromagnetically-separated section of the sensor 1. The lengths of the individual sections are provided in Fig. 4 in mm.

Fig. 5 shows a wiring diagram of the sensor 1 of the device according to the present invention containing six secondary coils of the multi-tap secondary winding 1.3 where each of the secondary coils 1.3 contains two winding parts wound on two electromagnetically-separated sections of the sensor 1. Such a device according to the present invention has a double primary winding 1.2 designed with twelve primary coils connected in series in each path of the primary winding 1.2 and is designed with a tapped centre. All the coils of both paths of the primary winding 1.2, i.e. the first primary winding 1.2.1 and the second primary winding 1.2.2, are set up in the respective electromagnetically-separated sections 1.1.1 of the primary winding 1.2. Here, the coils of the secondary winding 1.3 are set up on the second path of the primary winding 1.2, i.e. on the second primary winding 1.2.2, so that either of the pair of the windings of the secondary coils of the secondary winding 1.3 is set up on the different primary coil located in the different electromagnetically-separated section of the primary winding 1.2 which are adjacent to each other. The electromagnetically-separated sections of the primary winding 1.2 of the sensor 1 are designed similarly as in Fig. 2a, i.e. already with the above-mentioned opposite direction of winding of the primary coils in the given electromagnetically-separated section of the primary winding 1.2 on the appropriately designed core 1.1. In this example of the embodiment, the length of the individual electromagnetically-separated sections is advantageously 40 mm again, and the consecutive primary coils of each part of the primary winding have always the opposite direction of winding than the previous primary coil of the given part of the primary winding as already mentioned above. The direction of winding in the individual electromagnetically-separated sections of the primary winding 1.2 in both paths, i.e. the first primary winding 1.2.1 and the second primary winding 1.2.2, wound on each other in this example of the embodiment, is such so that the individual parts of the primary winding 1.2 do not disturb each other during operation but, on the contrary, so that the effects of current in both tiers of the primary winding 1.2 wound on each other are summed up.

In this case, the multi-tap secondary winding 1.3 consists of six secondary coils with a common tap 7a. The second tap of the first secondary coil is designated 1, the second tap of the second secondary coil is designated 2a, the second tap of the third secondary coil is designated 3a, the second tap of the fourth secondary coil is designated 4a, the second tap of the fifth secondary coil is designated 5a, the second tap of the sixth secondary coil is designated 6a, the common tap (i.e. the centre) of the primary winding is designated 10a, the second tap of the first part of the primary winding is designated 8a, and the second tap of the second part of the primary winding is designated 9a.

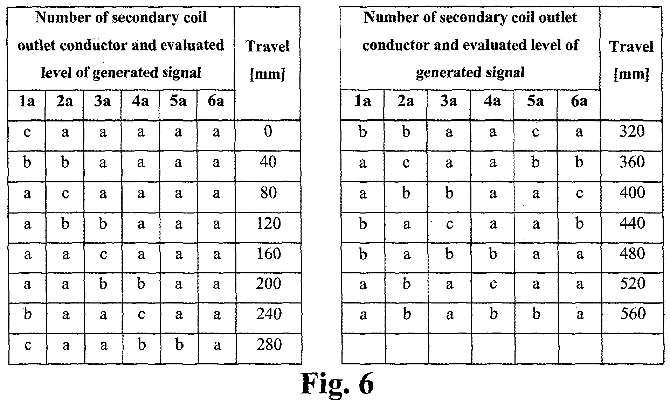

Fig. 6 then presents an example of a code on the sensor 1 consisting of six secondary coils of the secondary winding 1.3 and twelve primary coils of the primary winding 1.2 in each path thereof as illustrated in Fig. 5, while using the coding element 2 from Fig. 4. Each secondary coil of the secondary winding has two symmetrical parts set up on different electromagnetically-separated sections of the primary winding of the sensor 1. In this example of the embodiment, the length of the individual electromagnetically-separated sections of the sensor 1 is 40 mm and the coding element 2 moves in a step-wise manner also by 40 mm. The code generated on the sensor 1 shown in Fig. 5 with the coding element 2 shown in Fig. 4 is intended to measure the length of travel of 560 mm of the linear-motion element being monitored, when the coding element 2 moves in a step-wise manner against the sensor 1 (or vice versa) with the step equal to the length of the individual electromagnetically-separated sections of the sensor 1.

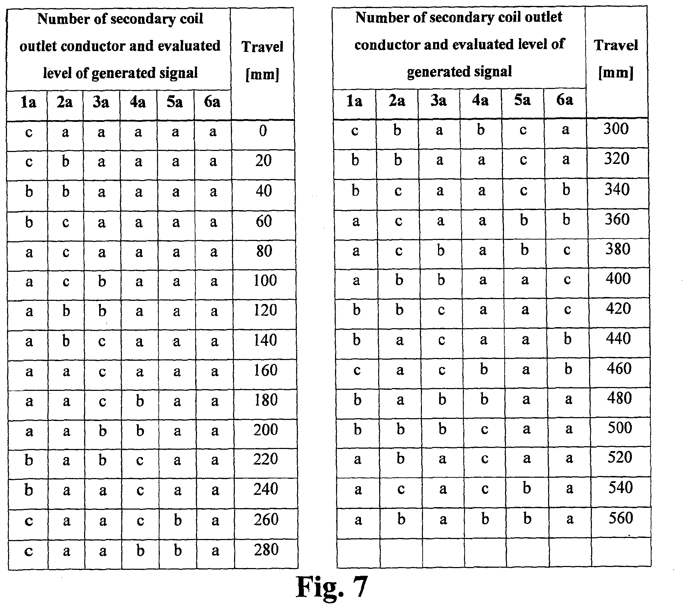

Fig. 7 presents an example of the code of the device according to the present invention found on the sensor 1 consisting of six secondary coils of the secondary winding 1.3 80 mm long each and twelve primary coils of the primary winding 1.2 in each of its paths 40 mm long each. The connection of the sensor is shown in Fig. 5. The coding element 2 from Fig. 4 is used here. The length of the individual electromagnetically-separated sections of the sensor is 40 mm. In this example of the embodiment, the coding element 2 moves continually. The travel length of the linear-motion element being monitored is 560 mm. As already mentioned above, similarly, the sensor 1 can move continually against the coding element 2, depending on which of them is connected with the linear-motion element being monitored to monitor the position of the element. In Fig. 4, the coding element 2 has magnetic and non-magnetic sections of different lengths. Here, the lengths of the individual sections are chosen and set up so that at least one of the values at the outlet of the multi-tap secondary winding 1.3 for measurement of the absolute position of the linear-motion element being monitored changes by 20 mm for the given secondary winding 1.3 with every displacement of the linear-motion element being measured. Owing to such embodiment of the coding element 2, one can increase the accuracy of measurement of the absolute position from the 40 mm step to a 20 mm step, and, in this example of the embodiment, the setting of the evaluation circuit of the voltage levels generated at the individual secondary coils of the multi-tap secondary winding 1.3 is made so that the voltage level at the outlet of each secondary coil is considered to have achieved the full value already at the moment of exceeding the lower threshold value, i.e. if one part of the double secondary coil is covered by the magnetic section of the coding element partially only, the signal is considered identical to that which would be in the case of covering the whole part of the double secondary coil in question. In particular, if only one half of one of the parts of the secondary coil is covered, i.e. 20 mm of one secondary coil in the given case, the output value is "b" similarly as if the whole 40 mm part of one secondary coil 80 mm long is covered. If the magnetic part of the coding element covers one whole part of one secondary coil and one half only of the other part of this secondary coil, i.e. if 60 mm of this secondary coil is covered, the output signal will be "c" similarly as if the whole double secondary coil, i.e. 80 mm, is covered. By a suitable arrangement of the individual lengths of the magnetic and non-magnetic sections of the coding element 2, such as, for instance, in the given example of the embodiment for the coding element being 560 mm long in Fig. 4, it is then ensured that for every position being monitored, i.e. in this example of the code of Fig. 7 to distinguish displacement by 20 mm, the code is unique in every position. According to the present invention, therefore, it is possible by suitably arranging the lengths of the magnetic and non-magnetic sections of the coding element 2 that with the sensor 1 having six double secondary coils whose diagram is illustrated in Fig. 5 and with the length of the individual electromagnetically-separated sections being 40 mm unique codes will be generated for coding element lengths exceeding significantly the length of the sensor, whereby ensuring identification of a greater number of absolute positions than the number of the electromagnetically-separated sections. In the given example of the embodiment, the number of absolute positions is 28.

Therefore, the above-provided description rather serves as illustration to understand the essence of the invention.

The practical application of the proposed solution is intended for measurement of position of control rods in the nuclear reactors of VVER 1000, VVER 1200 or other types.

### List of reference numerals:

1 Sensor
1.1 Magnetic core
1.1.1 Sections for the electromagnetically-separated parts of the primary winding
1.2 Primary winding
1.2.1 First primary winding
1.2.2 Second primary winding
1.3 Multi-tap secondary winding
1.3.1 First secondary coil of the multi-tap secondary winding
1.3.2 Second secondary coil of the multi-tap secondary winding
2 Coding element
2.1 Magnetic part of the coding element
2.2 Non-magnetic part of the coding element
1a Tap of the first secondary coil
2a Tap of the second secondary coil
3a Tap of the third secondary coil
4a Tap of the fourth secondary coil
5a Tap of the fifth secondary coil
6a Tap of the sixth secondary coil
7a Common tap of the secondary coils
8a Tap of the first part of the primary winding
9a Tap of the second part of the primary winding
10a Tap of the common centre of the primary winding

## Claims

1. Method of measurement of a linear-motion element's absolute position during which a coding element and a sensor move against each other when the linear-motion element changes its position, either the coding element or the sensor is connected with the linear-motion element; the coding element consisting of magnetic and non-magnetic parts positioned alternately in a line, the sensor includes a powered primary winding and a multi-tap measuring secondary winding consisting of a group of secondary coils, the multi-tap measuring secondary winding is magnetically-coupled with said primary winding to generate voltage on the multi-tap secondary winding; wherein on the secondary coils of the sensor a code unequivocally identifying the absolute position of the linear-motion element is generated due to corresponding positions of the magnetic and non-magnetic parts of the coding element against the sensor, **characterized by** arranging the primary winding in electromagnetically-separated sections, each of the secondary coils of the multi-tap secondary winding consisting of at least two winding parts, each winding part of the secondary coil's winding organized on a different electromagnetically-separated section of the primary winding to allow generating at least three voltage levels on each of the secondary coils in dependence on the positions of magnetic and non-magnetic parts of the coding elements against individual secondary coils of the sensor, corresponding to the specific position of the linear-motion element; the number of the voltage levels created on each secondary coil is related with the number of the winding parts of the secondary coil, each winding part organized on the electromagnetically separated sections of the primary winding, wherein from the voltage levels on every secondary coil of the multi-tap secondary winding a unique combination of the voltage levels on all the secondary coils are formed for every measured position of the linear-motion element, which allows for reducing the number of the secondary coils needed to determine the linear-motion element's absolute position.

2. Device for implementing the method of measurement of an absolute position of a linear-motion element according to Claim 1, in particular for a nuclear reactor control rod, the device consisting of a position sensor (1) and a coding element (2) set in parallel or coaxially to it, the coding element (2) consisting of magnetic parts (2.1) and non-magnetic parts (2.2) positioned alternately in a line, where the coding element (2) and with the position sensor (1) are adapted to move against each other in a linear way to evaluate the position of the linear-motion element, the position sensor (1) including a power-supplied primary winding (1.2) and a multi-tap secondary winding (1.3) magnetically-coupled with the primary winding and galvanically separated from it, **characterized in that** the primary winding (1.2) is wound in sections arranged side by side, the sections of primary winding are mutually electromagnetically-separated one from another, the multi-tap secondary winding (1.3) consisting of a set of separate secondary coils arranged in a line is magnetically-coupled with this primary winding (1.2), wherein each secondary coil consists of at least two winding parts and is magnetically-coupled with at least two electromagnetically-separated sections of the primary winding, each winding part of each secondary coil of the secondary winding (1.3) is arranged magnetically-coupled with a different electromagnetically-separated section of the primary winding (1.2) to generate at least three voltage levels on each secondary coil of the multi-tap secondary winding, wherein the number of the voltage levels created on each secondary coil is related with the number of the winding parts of the secondary coil, each winding part arranged on mutually electromagnetically-separated separated section of the primary winding, and that the length of the individual magnetic and non-magnetic parts of the coding element (2) corresponds to the multiples of the length of the electromagnetically-separated section of the primary winding (1.2).

3. The device according to Claim 2, **characterized in that** the magnetic coupling of the primary winding (1.2) with the secondary winding (1.3) is made through a parallel or a coaxial arrangement of both windings.

4. The device according to Claim 2 or 3, **characterized in that** the primary winding (1.2) is a multiple winding with at least two paths laid in the coaxially arranged tiers, the centre of the multiple winding being tapped between the neighbouring paths to supply each path of the primary winding (1.2) separately.

5. The device according to Claim 2 or 3, **characterized in that** the electromagnetically-separated sections of the primary winding (1.2) are designed with the opposite winding direction of the primary winding (1.2), and in each of its electromagnetically-separated sections the primary winding (1.2) is wound in an opposite direction of winding as against the neighbouring electromagnetically-separated section of the primary winding (1.2).

6. The device according to Claim 2, 3 or 4, **characterized in that** the secondary coil of the secondary winding (1.3) consists of two essentially identical winding parts and the shortest length of the individual magnetic and non-magnetic sections of the coding element corresponds in essence to the length of two electromagnetically-separated sections of the primary winding (1.2) to generate three voltage levels on each secondary coil of the secondary winding (1.3) in dependence on the position of the linear-motion element being monitored.

7. The device according to Claim 2, 3 or 4, **characterized in that** the secondary coil of the secondary winding (1.3) consists of three winding parts and the shortest length of the individual magnetic and non-magnetic sections of the coding element (2) corresponds in essence to the length of three electromagnetically-separated sections of the primary winding (1.2) to generate four voltage levels on each secondary coil of the secondary winding (1.3) in dependence on the position of the linear-motion element being monitored.

8. The device according to Claim 2, **characterized in that** the length of each electromagnetically-separated section of the primary winding (1.2) is identical.

9. The device according to Claim 7, **characterized in that** the length of the individual magnetic and non-magnetic sections of the coding element (2) corresponds in essence to the whole multiples of the length of one electromagnetically-separated section of the primary winding (1.2).

## Patentansprüche

1. Verfahren zur Messung der absoluten Position eines Linearbewegungselements, bei dem sich ein Kodierelement und ein Sensor gegeneinander bewegen, wenn das Linearbewegungselement seine Position ändert, wobei entweder das Kodierelement oder der Sensor mit dem Linearbewegungselement verbunden ist;
das Kodierelement aus magnetischen und nichtmagnetischen Teilen besteht, die abwechselnd in einer Linie angeordnet sind, der Sensor eine gespeiste Primärwicklung und eine Sekundärwicklung mit mehreren Anzapfungen enthält, die aus einer Gruppe von Sekundärspulen besteht, die Sekundärwicklung mit mehreren Anzapfungen magnetisch mit der Primärwicklung gekoppelt ist, um eine Spannung an der Sekundärwicklung mit mehreren Anzapfungen zu erzeugen;
wobei auf den Sekundärspulen des Sensors ein Code erzeugt wird, der die absolute Position des Linearbewegungselements aufgrund der entsprechenden Positionen der magnetischen und nichtmagnetischen Teile des Kodierelements gegenüber dem Sensor eindeutig identifiziert,
**dadurch gekennzeichnet, dass** die Primärwicklung in elektromagnetisch getrennten Abschnitten angeordnet ist, wobei jede der Sekundärspulen der Sekundärwicklung mit mehreren Anzapfungen aus mindestens zwei Wicklungsteilen besteht, wobei jeder Wicklungsteil der Sekundärspulenwicklung auf einem anderen elektromagnetisch getrennten Abschnitt der Primärwicklung angeordnet ist, um die Erzeugung von mindestens drei Spannungspegeln auf jeder der Sekundärspulen in Abhängigkeit von den Positionen der magnetischen und nichtmagnetischen Teile der Kodierelemente gegen einzelne Sekundärspulen des Sensors zu ermöglichen, die der spezifischen Position des Linearbewegungselements entsprechen;
die Anzahl der auf jeder Sekundärspule erzeugten Spannungspegel mit der Anzahl der Wicklungsteile der Sekundärspule in Beziehung steht, wobei jeder Wicklungsteil auf den elektromagnetisch getrennten Abschnitten der Primärwicklung organisiert ist, wobei aus den Spannungspegeln auf jeder Sekundärspule der Sekundärwicklung mit mehreren Anzapfungen eine eindeutige Kombination der Spannungspegel auf allen Sekundärspulen für jede gemessene Position des Linearbewegungselements gebildet wird, was es erlaubt, die Anzahl der Sekundärspulen zu reduzieren, die zur Bestimmung der absoluten Position des Linearbewegungselements erforderlich sind.

2. Vorrichtung zur Durchführung des Verfahrens zur Messung einer absoluten Position eines Linearbewegungselementes nach Anspruch 1, insbesondere für einen Kernreaktorsteuerstab, wobei die Vorrichtung aus einem Positionssensor (1) und einem parallel oder koaxial dazu angeordneten Kodierelement (2) besteht, wobei das Kodierelement (2.1) aus magnetischen Teilen (2.1) und nichtmagnetischen Teilen (2. 2) besteht, die abwechselnd in einer Linie angeordnet sind, wobei das Kodierelement (2) und der Positionssensor (1) sich linear gegeneinander bewegen können, um die Position des Linearbewegungselements auszuwerten, wobei der Positionssensor (1) eine stromversorgte Primärwicklung (1.2) und eine Sekundärwicklung mit mehreren Anzapfungen (1. 3), die mit der Primärwicklung magnetisch gekoppelt und von dieser galvanisch getrennt ist, **dadurch gekennzeichnet, dass** die Primärwicklung (1.2) in nebeneinander angeordneten Abschnitten gewickelt ist, die Abschnitte der Primärwicklung elektromagnetisch voneinander getrennt sind, die Sekundärwicklung (1. 3), die aus einem Satz separater, in einer Reihe angeordneter Sekundärspulen besteht, mit dieser Primärwicklung (1.2) magnetisch gekoppelt ist, wobei jede Sekundärspule aus mindestens zwei Wicklungsteilen besteht und mit mindestens zwei elektromagnetisch getrennten Abschnitten der Primärwicklung magnetisch gekoppelt ist, jeder Wicklungsteil jeder Sekundärspule der Sekundärwicklung (1.3) magnetisch gekoppelt mit einem anderen elektromagnetisch getrennten Abschnitt der Primärwicklung (1.2) magnetisch gekoppelt ist, um mindestens drei Spannungspegel an jeder Sekundärspule der Sekundärwicklung mit mehreren Anzapfungen zu erzeugen, wobei die Anzahl der an jeder Sekundärspule erzeugten Spannungspegel mit der Anzahl der Wicklungsteile der Sekundärspule zusammenhängt, wobei jeder Wicklungsteil auf einem elektromagnetisch getrennten Abschnitt der Primärwicklung angeordnet ist, und dass die Länge der einzelnen magnetischen und nichtmagnetischen Teile des Kodierelements (2) dem Vielfachen der Länge des elektromagnetisch getrennten Abschnitts der Primärwicklung (1.2) entspricht.

3. Vorrichtung nach Anspruch 2, **dadurch gekennzeichnet, dass** die magnetische Kopplung der Primärwicklung (1.2) mit der Sekundärwicklung (1.3) durch eine parallele oder koaxiale Anordnung der beiden Wicklungen erfolgt.

4. Vorrichtung nach Anspruch 2 oder 3, **dadurch gekennzeichnet, dass** die Primärwicklung (1.2) eine Mehrfachwicklung mit mindestens zwei in den koaxial angeordneten Etagen verlegten Pfaden ist, wobei die Mitte der Mehrfachwicklung zwischen den benachbarten Pfaden abgegriffen wird, um jeden Pfad der Primärwicklung (1.2) separat zu versorgen.

5. Vorrichtung nach Anspruch 2 oder 3, **dadurch gekennzeichnet, dass** die elektromagnetisch getrennten Abschnitte der Primärwicklung (1.2) mit entgegengesetztem Wicklungssinn der Primärwicklung (1.2) ausgeführt sind, und die Primärwicklung (1.2) in jedem ihrer elektromagnetisch getrennten Abschnitte in entgegengesetztem Wicklungssinn gegenüber dem benachbarten elektromagnetisch getrennten Abschnitt der Primärwicklung (1.2) gewickelt ist.

6. Vorrichtung nach Anspruch 2, 3 oder 4, **dadurch gekennzeichnet, dass** die Sekundärspule der Sekundärwicklung (1.3) aus zwei im Wesentlichen identischen Wicklungsteilen besteht und die kürzeste Länge der einzelnen magnetischen und nichtmagnetischen Abschnitte des Kodierelementes im Wesentlichen der Länge von zwei elektromagnetisch getrennten Abschnitten der Primärwicklung (1.2) entspricht, um an jeder Sekundärspule der Sekundärwicklung (1.3) drei Spannungspegel in Abhängigkeit von der Position des überwachten Linearbewegungselementes zu erzeugen.

7. Vorrichtung nach Anspruch 2, 3 oder 4, **dadurch gekennzeichnet, dass** die Sekundärspule der Sekundärwicklung (1.3) aus drei Wicklungsteilen besteht und die kürzeste Länge der einzelnen magnetischen und nichtmagnetischen Abschnitte des Kodierelements (2) im Wesentlichen der Länge von drei elektromagnetisch getrennten Abschnitten der Primärwicklung (1.2) zur Erzeugung von vier Spannungsebenen an jeder Sekundärspule der Sekundärwicklung (1.3) in Abhängigkeit von der Position des zu überwachenden Linearbewegungselements entspricht.

8. Vorrichtung nach Anspruch 2, **dadurch gekennzeichnet, dass** die Länge jedes elektromagnetisch getrennten Abschnitts der Primärwicklung (1.2) identisch ist.

9. Vorrichtung nach Anspruch 7, **dadurch gekennzeichnet, dass** die Länge der einzelnen magnetischen und nichtmagnetischen Abschnitte des Kodierelements (2) im Wesentlichen dem ganzen Vielfachen der Länge eines elektromagnetisch getrennten Abschnitts der Primärwicklung (1.2) entspricht.

## Revendications

1. Procédé de mesure d'une position absolue d'un élément à mouvement linéaire pendant laquelle un élément de codage et un capteur se déplacent l'un contre l'autre lorsque l'élément à mouvement linéaire change sa position, l'élément de codage ou le capteur étant relié à l'élément à mouvement linéaire ; l'élément de codage consistant en des parties magnétiques et non-magnétiques positionnées de manière alternée en ligne, le capteur comprenant un enroulement primaire alimenté et un enroulement secondaire de mesure à prises multiples consistant en un groupe de bobines secondaires, l'enroulement secondaire de mesure à prises multiples étant couplé magnétiquement audit enroulement primaire pour générer une tension sur l'enroulement secondaire à prises multiples ; dans lequel, sur les bobines secondaires du capteur, un code identifiant sans équivoque la position absolue de l'élément à mouvement linéaire est généré en raison de positions correspondantes des parties magnétiques et non-magnétiques de l'élément de codage contre le capteur, **caractérisé par** la disposition de l'enroulement primaire en sections à séparation électromagnétique, chacune des bobines secondaires de l'enroulement secondaire à prises multiples étant consistant en au moins deux parties d'enroulement, chaque partie d'enroulement de l'enroulement de la bobine secondaire étant organisée sur une section à séparation électromagnétique différente de l'enroulement primaire pour permettre de générer au moins trois niveaux de tension sur chacune des bobines secondaires en fonction des positions des parties magnétiques et non-magnétiques des éléments de codage contre des bobines secondaires individuelles du capteur, correspondant à la position spécifique de l'élément à mouvement linéaire ; le nombre de niveaux de tension créés sur chaque bobine secondaire étant lié au nombre des parties d'enroulement de la bobine secondaire, chaque partie d'enroulement étant organisée sur les sections à séparation électromagnétique de l'enroulement primaire ; dans lequel, à partir des niveaux de tension sur chaque bobine secondaire de l'enroulement secondaire à prises multiples, une combinaison unique des niveaux de tension sur toutes les bobines secondaires est formée pour chaque position mesurée de l'élément à mouvement linéaire, ce qui permet de réduire le nombre des bobines secondaires nécessaires pour déterminer la position absolue de l'élément à mouvement linéaire.

2. Dispositif pour mettre en oeuvre le procédé de mesure d'une position absolue d'un élément à mouvement linéaire selon la revendication 1, en particulier pour une barre de commande de réacteur nucléaire, le dispositif consistant en un capteur de position (1) et un élément de codage (2) placé parallèlement ou coaxialement à celui-ci, l'élément de codage (2.1) consistant en des parties magnétiques (2.1) et des parties non-magnétiques (2.2) positionnées de manière alternée en ligne, l'élément de codage (2) et le capteur de position (1) étant conçus pour se déplacer l'un contre l'autre de manière linéaire de façon à déterminer la position de l'élément à mouvement linéaire, le capteur de position (1) comprenant un enroulement primaire alimenté en puissance (1.2) et un enroulement secondaire à prises multiples (1.3) couplé magnétiquement à l'enroulement primaire et séparé de celui-ci de manière galvanique, **caractérisé par le fait que** l'enroulement primaire (1.2) est enroulé en sections disposées côte à côte, les sections de l'enroulement primaire sont mutuellement séparées électromagnétiquement les unes des autres, l'enroulement secondaire à prises multiples (1.3) consistant en un ensemble de bobines secondaires séparées disposées en ligne est couplé magnétiquement à cet enroulement primaire (1.2), dans lequel chaque bobine secondaire consiste en au moins deux parties d'enroulement et est couplée magnétiquement à au moins deux sections à séparation électromagnétique de l'enroulement primaire, chaque partie d'enroulement de chaque bobine secondaire de l'enroulement secondaire (1.3) est agencée couplée magnétiquement à une section à séparation électromagnétique différente de l'enroulement primaire (1.2) pour générer au moins trois niveaux de tension sur chaque bobine secondaire de l'enroulement secondaire à prises multiples, dans lequel le nombre des niveaux de tension créés sur chaque bobine secondaire est lié au nombre des parties d'enroulement de la bobine secondaire, chaque partie d'enroulement étant disposée sur une section à séparation électromagnétique mutuellement séparée de l'enroulement primaire, et **par le fait que** la longueur des parties magnétiques et non-magnétiques individuelles de l'élément de codage (2) correspond aux multiples de la longueur de la section à séparation électromagnétique de l'enroulement primaire (1.2).

3. Dispositif selon la revendication 2, **caractérisé par le fait que** le couplage magnétique de l'enroulement primaire (1.2) à l'enroulement secondaire (1.3) est réalisé par une disposition parallèle ou coaxiale des deux enroulements.

4. Dispositif selon la revendication 2 ou 3, **caractérisé par le fait que** l'enroulement primaire (1.2) est un enroulement multiple avec au moins deux voies disposées dans les niveaux agencés coaxialement, le centre de l'enroulement multiple étant prélevé entre les voies voisines pour alimenter séparément chaque voie de l'enroulement primaire (1.2).

5. Dispositif selon la revendication 2 ou 3, **caractérisé par le fait que** les sections à séparation électromagnétique de l'enroulement primaire (1.2) sont conçues avec la direction d'enroulement opposée de l'enroulement primaire (1.2) et, dans chacune de ses sections à séparation électromagnétique, l'enroulement primaire (1.2) est enroulé dans une direction d'enroulement opposée à celle de la section à séparation électromagnétique voisine de l'enroulement primaire (1.2).

6. Dispositif selon la revendication 2, 3 ou 4, **caractérisé par le fait que** la bobine secondaire de l'enroulement secondaire (1.3) consiste en deux parties d'enroulement essentiellement identiques et la longueur la plus courte des sections magnétiques et non-magnétiques individuelles de l'élément de codage correspond en substance à la longueur de deux sections à séparation électromagnétique de l'enroulement primaire (1.2) pour générer trois niveaux de tension sur chaque bobine secondaire de l'enroulement secondaire (1.3) en fonction de la position de l'élément à mouvement linéaire qui est surveillé.

7. Dispositif selon la revendication 2, 3 ou 4, **caractérisé par le fait que** la bobine secondaire de l'enroulement secondaire (1.3) consiste en trois parties d'enroulement et la longueur la plus courte des sections magnétiques et non-magnétiques individuelles de l'élément de codage (2) correspond en substance à la longueur de trois sections à séparation électromagnétique de l'enroulement primaire (1.2) pour générer quatre niveaux de tension sur chaque bobine secondaire de l'enroulement secondaire (1.3) en fonction de la position de l'élément à mouvement linéaire qui est surveillé.

8. Dispositif selon la revendication 2, **caractérisé par le fait que** la longueur de chaque section à séparation électromagnétique de l'enroulement primaire (1.2) est identique.

9. Dispositif selon la revendication 7, **caractérisé par le fait que** la longueur des sections magnétiques et non-magnétiques individuelles de l'élément de codage (2) correspond en substance aux multiples entiers de la longueur d'une section à séparation électromagnétique de l'enroulement primaire (1.2).
